# EUROPEAN PATENT SPECIFICATION

(11) **EP 4 583 241 B1**
(45) Date of publication and mention of the grant of the patent: **14.10.2026**
(21) Application number: 24216771.6
(22) Date of filing: 02.12.2024
(51) Int. Cl.: H01M 10/48, B60L 58/26, H01M 10/613, H01M 10/625, H01M 10/63, H01M 10/6568

(54) **IMERSION COOLING SYSTEM AND METHOD OF OPERATING SUCH**
TAUCHKÜHLSYSTEM UND VERFAHREN ZUM BETRIEB DAVON
SYSTÈME DE REFROIDISSEMENT PAR IMMERSION ET PROCÉDÉ DE FONCTIONNEMENT ASSOCIÉ

(30) Priority: 04.01.2024 US 202418404484
(43) Date of publication of application: 09.07.2025
(73) Proprietor: Deere & Company, Moline, IL 61265 (US)
(72) Inventor: KENNEDY, Thomas L., 68163 Mannheim (DE); WANTSCHIK, Paul A., 68163 Mannheim (DE)
(74) Representative: Reichert, Christian

(56) References cited:
- AU-A1- 2015 339 773
- US-A1- 2021 162 884

## Description

The present disclosure generally relates to immersion cooling of batteries, and, more specifically, to a dual pump system architecture and operation for immersion cooling of batteries for electric vehicles.

### BACKGROUND

Battery systems of electric vehicles, including hybrid electric vehicles, can utilize both active heating and cooling systems that assist with one or more batteries of the electrical vehicle being, at, or around, certain operating temperatures. Moreover, such heating and cooling systems can assist with the battery(ies) of the electric vehicle being maintained at temperatures at which the battery(ies) can be charged, as well as discharged, at certain current levels, including be discharged at current levels that can support or satisfy various functions of the electric vehicle.

One manner of transferring heat from batteries is immersion cooling. With immersion cooling, battery cells of the battery can come into direct contact with a cooling fluid. Accordingly, the cooling fluid utilized with immersion cooling is typically an electrically non-conductive liquid, also referred to as a dielectric thermal liquid. Such dielectric fluids can be or can include an oil whose viscosity can change with changes in temperature of the dielectric fluid.

As an example, a battery thermal management system is known from US 2021/0162884 A1. Said system includes a battery pack, a circulation subsystem, and a heat exchanger. The system can optionally include a cooling system, a reservoir, a de-ionization filter, a battery charger, and a controller.

### SUMMARY

The present disclosure may comprise one or more of the following features and combinations thereof.

In one embodiment of the present disclosure, an immersion cooling system is provided for immersion cooling of a plurality of battery cells of a battery of an electric vehicle using a dielectric cooling liquid, according to claim 1.

These and other features of the present disclosure will become more apparent from the following description of the illustrative embodiments.

### BRIEF DESCRIPTION OF THE DRAWINGS

The disclosure contained herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
Figure 1 illustrates a first embodiment of at least a portion of an exemplary dual pump immersion cooling system that includes a fluid circuit in which a pair of pumps are arranged in a parallel configuration.
Figure 2 illustrates a second embodiment of at least a portion of an exemplary dual pump immersion cooling system in which a pair of parallel branches of the fluid circuit each include a pump and a control valve.
Figure 3 illustrates the exemplary dual pump immersion cooling system shown in Figure 1 in which the dual pump immersion cooling system is being operated in a pressure mode.
Figure 4 illustrates the exemplary immersion cooling fluid circuit shown in Figure 1 in which the dual pump immersion cooling system is being operated in a flow mode.
Figure 5 illustrates an exemplary graphical representation of a kinematic viscosity diagram for a non-limiting example of a hypothetical dielectric fluid.
Figure 6 illustrates an exemplary method for operating a dual pump immersion cooling system for one or more batteries of an electric vehicle.

Corresponding reference numerals are used to indicate corresponding parts throughout the several views.

### DETAILED DESCRIPTION

While the concepts of the present disclosure are susceptible to various modifications and alternative forms, specific embodiments thereof have been shown by way of example in the drawings and will be described herein in detail.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

A number of features described below may be illustrated in the drawings in phantom. Depiction of certain features in phantom is intended to convey that those features may be hidden or present in one or more embodiments, while not necessarily present in other embodiments. Additionally, in the one or more embodiments in which those features may be present, illustration of the features in phantom is intended to convey that the features may have location(s) and/or position(s) different from the locations(s) and/or position(s) shown.

The embodiments of the present disclosure described below are not intended to be exhaustive or to limit the disclosure to the precise forms in the following detailed description. Rather, the embodiments are chosen and described so that others skilled in the art may appreciate and understand the principles and practices of the present disclosure.

Embodiments of the subject disclosure generally relate to an immersion cooling system for immersion cooling of one or more batteries of an electric vehicle that comprises at least first and second pumps arranged in a parallel branches of a fluid circuit. One of the first and second pumps can, at different times, be selectively operated to pump a dielectric cooling fluid through the fluid circuit, and thus the battery. Such selective operation of each pump, including selective deactivation or retention in an off state of the other pump, can be based, at least in part, on one or more conditions, characteristics, or properties (collectively referred to herein as characteristics) of the cooling fluid, such as, for example, the temperature and/or viscosity of the cooling fluid. Moreover, as discussed below, the pumps can be different styles or types of pumps such that a first pump can be more efficient or effective than the second pump in building or attaining predetermined cooling fluid pressures within the fluid circuit at certain cooling fluid temperatures and/or viscosities, while the second pump can be more efficient or effective in attaining relatively high cooling liquid flow rates at other cooling fluid temperatures and/or viscosities. For example, compared to at least the first pump, the second pump can be a low-pressure, high-flow rate type of pump that can be selectively operated when the cooling fluid has generally low viscosities that can be associated with the cooling fluid being at relatively warm or high temperatures, including, for example, temperatures around or above the freezing point of water. Similarly, compared to at least the second pump, the first pump can be a high-pressure, low-flow rate type of pump that can be selectively operated when the cooling fluid has generally higher viscosities that can be associated with the cooling fluid being at low temperatures, including, for example, at temperatures around or below the freezing point of water. For example, the first pump can be a positive displacement pump, among other types of pumps, and the second pump can be a centrifugal pump, among other types of pumps. The fluid circuit can also include a first control valve that is positioned downstream of the second pump at a location that prevents backflow into the second pump during operation of the high-pressure first pump.

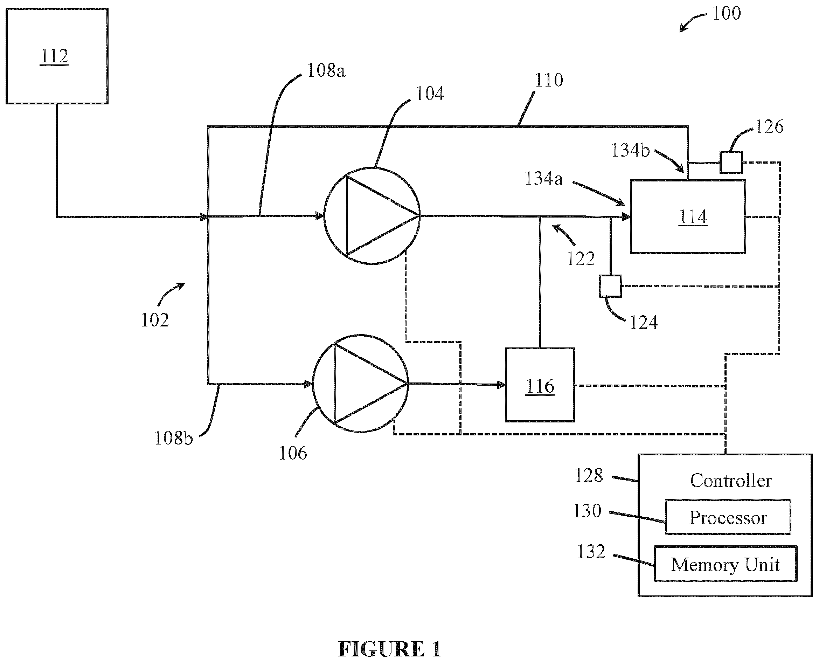

Figure 1 illustrates a first embodiment of at least a portion of an exemplary dual pump immersion cooling system 100 having a fluid circuit 102 that includes a pair of pumps, namely a first pump 104 and a second pump 106, arranged in a parallel configuration in, or along parallel branches 108a, 108b of, the fluid circuit 102. The illustrated dual pump immersion cooling system 100 is configured for a cooling fluid, such as a dielectric cooling fluid, to circulate between components or devices of the immersion cooling fluid circuit 102 through a one or more conduits 110, including tubes or pipes, as well as combinations thereof, as well as the associated fittings and couplings. A variety of different types of cooling fluids can be circulated about the immersion cooling fluid circuit 102, including, but not limited to, mineral oil, as well as various commercially available dielectric thermal fluids, among other dielectric cooling liquids. Further, the fluid circuit 102 illustrated in Figure 1, as well as other fluid circuits, can include a variety of other components or devices in addition to those shown and discussed herein, including, but not limited to, heaters, heat exchangers, radiators, filters, control valves, and/or relief vales, as well as combinations thereof, among other components of cooling systems utilized with at least electrical vehicles.

As seen in Figure 1, the illustrated immersion cooling fluid circuit 102 can include a reservoir 112. To the extent necessary, the reservoir 112 can assist in replenishing at least a portion of the dielectric cooling fluid that is circulating through at least the conduits 110. Additionally, or alternatively, to the extent needed, the reservoir 112 can also provide an outlet for a flow, including an overflow, of the dielectric cooling fluid or associated gases that may be at least occasionally present within at least a portion of the immersion cooling fluid circuit 102 as the dielectric cooling fluid is heated or overheated.

According to the illustrated embodiment, compared to at least the first pump 104, the second pump 106 is a low-pressure, high-flow rate type of pump, such as, for example, a centrifugal pump, among other types of pumps. Moreover, the second pump 106 can be the type of pump that satisfies both the relatively low-pressure requirements of one or more batteries 114 of the immersion cooling system 100 while also facilitating a relatively high-flow rate of the cooling fluid so as transfer heat from the battery 114 to the cooling fluid in a manner that can maintain the battery 114 at or around the temperature requirements of the battery 114. According to certain embodiments, the second pump 106 can be configured to operate in a manner such that the cooling fluid has a pressure that is at least at or above the lower end of the pressure requirements or thresholds of the battery 114. Conversely, the first pump 104 can, at least compared to the second pump 106, be a high-pressure, low-flow rate type of pump, such as, for example, a positive displacement pump. Thus, in certain instances, the first pump 104 can be a type of pump that can, in at least certain instances, pump the cooling fluid in a manner that the cooling fluid can be at, or least around, the upper pressure requirements or thresholds of the battery 114.

The differences in the first and second pumps 104, 106, including, for example, one or both of the different cooling fluid flow rates and/or pressures attain by selective operation of one of the first and second pumps 104, 106, can be beneficial in different situations or environments. For example, during first conditions, such as, for example, when the cooling fluid is at or around a first temperature and/or a first viscosity, operation of the first pump 104 may be more efficient or beneficial than operation of the second pump 106. Conversely, the when the cooling fluid is at or around a second temperature and/or a second viscosity, operation of the second pump 106 may be more efficient or beneficial than operation of the first pump 104. Further, in such an embodiments, the first temperature can be lower than the second temperature, and the first viscosity can be higher than the second viscosity. Further, the terms "first temperature" and "second temperature" can, for example, each refer to a different range of temperatures, one or more temperature set points, and/or temperature thresholds or limits of, or for, the cooling fluid. Similarly, the terms "first viscosity" and "second viscosity" can, for example, each refer to a different range of viscosities, one or more viscosity set points, and/or viscosity thresholds or limits of, or for, the cooling fluid.

According to certain embodiments, depending on at least the temperature and/or viscosity of the cooling fluid, the dual pump immersion cooling system 100 is configured to selectively operate at least in either a pressure mode or a flow mode. Further, according to certain embodiments, the dual pump immersion cooling system 100 can also, at least temporarily, be operated in a transition mode during which the dual pump immersion cooling system 100 transitions between the pressure mode to the flow mode, or vice versa, as further discussed below.

During operation in the pressure mode, the dual pump immersion cooling system 100 can operate the first pump 104 while the second pump 106 is not operating, including, for example, when the second pump 106 is in an off state, which can correspond to the second pump 106 not receiving electrical power for operation and/or otherwise being deactivated. With respect to embodiments in which the second pump 106 is a centrifugal pump, when the second pump 106 is in the off state, an impeller of the second pump 106 may not be running and/or the centrifugal pump may not be receiving electrical power to run the impeller. Compared to the flow mode, the pressure mode can be configured to elevate the pressure of the cooling fluid within the fluid circuit 102 to a level that can, for example, enhance the transfer for heat from the battery 114 to the cooling fluid. For example, the dual pump immersion cooling system 100 can be configured to engage, or otherwise operate in, the pressure mode at least when the cooling fluid is at, or around, relatively low temperatures and/or has relatively high viscosities that correspond to the above-mentioned first temperature and/or first viscosity, respectively. According to certain embodiments, the first temperature can correspond at least to temperatures, including ranges of temperatures, at which the cooling fluid is around or below the freezing point of water. Thus, at such relatively cold temperatures, the viscosity of the cooling fluid, at least relative to the second viscosity, can be relatively high. Thus, for example, operation of the immersion cooling system 100 in the pressure mode can arise at least in situations in which the vehicle to which the fluid circuit is incorporated being started in relatively cold ambient temperatures, including ambient temperatures that are around, as well as below, the freezing point of water (e.g., 0 degrees Celsius (° C)). However, the first temperature and/or first viscosity, and thus the pressure mode, can be at least partially dependent on the composition of the cooling liquid.

In such situations, the relatively cold ambient temperature, and thus the associated cold, and relatively high viscous, characteristics of the cooling fluid, can contribute to the cooling liquid being at a relatively low pressure within the fluid circuit 102. While what may constitute a low temperature can vary, including for different cooling fluid compositions and/or fluid circuits, according to certain embodiments, such low-pressure situations can arise when the pressure of the cooling fluid within the fluid circuit 102 is below around 1 bar, among other pressures. In such situations, compared to the characteristics of the second pump 106, the high-pressure characteristics of the first pump 104 can be beneficial in relatively rapidly elevating the pressure of the cooling fluid within the fluid circuit 102, such as, for example, to a pressure of around 1 bar to 2 bars, among other pressures. The pressure to which the first pump 104 is to elevate the cooling fluid within the fluid circuit 102 can be based on a variety of different considerations, including, for example, the properties, including pressure tolerances, of the battery 114.

Operation of the first pump 104 can also facilitate a flow of the relatively high viscous cooling fluid through the fluid circuit 102 at a rate, or of a quantity, that can facilitate a transfer of heat away from the battery cells of the battery 114 and to the flowing cooling fluid. However, in the pressure mode, building or elevating the pressure of the cooling fluid within the fluid circuit 102 may take priority over attaining flow rates that may otherwise later be attained when the immersion cooling system 100 is operating in the flow mode. Yet, by using the first, high-pressure, low-flow, pump 104, concerns regarding pump stall that could otherwise be associated with attempts to circulate the cold, high viscous cooling fluid using the second, low-pressure, high-volume pump 106 can be avoided, if not otherwise eliminated.

While operation of the dual pump immersion cooling system 100 in the pressure mode may place an emphasis on elevating the pressure of the cooling fluid in the fluid circuit 102, the emphasis of operation of the immersion cooling system 100 in the flow mode may be, at least relative to the pressure mode, in elevating, and sustaining, a relatively high flow rate of the cooling fluid through the battery 114 and/or the fluid circuit 102. Moreover, the flow mode can be configured to attain/maintain a flow rate of the cooling fluid within the fluid circuit 102 via operation of the second pump 106 in a manner that effectively transfers heat from the battery 114 during at least generally normal operating temperatures or temperature ranges of the battery 114 and/or the cooling liquid. Further, while in the flow mode, the first pump 104 may be in an off state, such as, for example, by not receiving electrical power for operation and/or otherwise being deactivated. According to certain embodiments, the second pump 106 can be operated during the flow mode to increase the flow rate of the cooling liquid in the fluid circuit 102 while maintaining, or, alternatively, increasing, the pressure of the cooling fluid that was attained by operation of the first pump 104 during operation of the immersion cooling system 100 in the pressure mode.

Accordingly, the dual pump immersion cooling system 100 can switch from operation in the pressure mode to operation in the flow mode after the temperature of the cooling fluid has risen above the first temperature, or the viscosity of the cooling fluid has dropped below the first viscosity. Accordingly, operation of the dual pump immersion cooling system 100 in the pressure mode may be limited to certain, low temperature conditions, while the flow mode can be associate with normal operating conditions of the battery 114 or associated engine, including those instances in which the cooling fluid is above the first temperature or below the first viscosity. Further, in certain instances in which the cooling fluid has not dropped to the first temperature, and/or risen to the first viscosity, the dual pump immersion cooling system 100 may not be operated in the pressure mode. Instead, for example, upon staring the associated engine, the dual pump immersion cooling system 100 can operate, and continue to operate, in the flow mode. Accordingly, operation of the first pump 104 instead of the second pump 106 may not occur unless certain, low temperature conditions exist. Therefore, the flow mode, and associated operation of the second pump 106, may be consider the normal operating mode of the dual pump immersion cooling system 100.

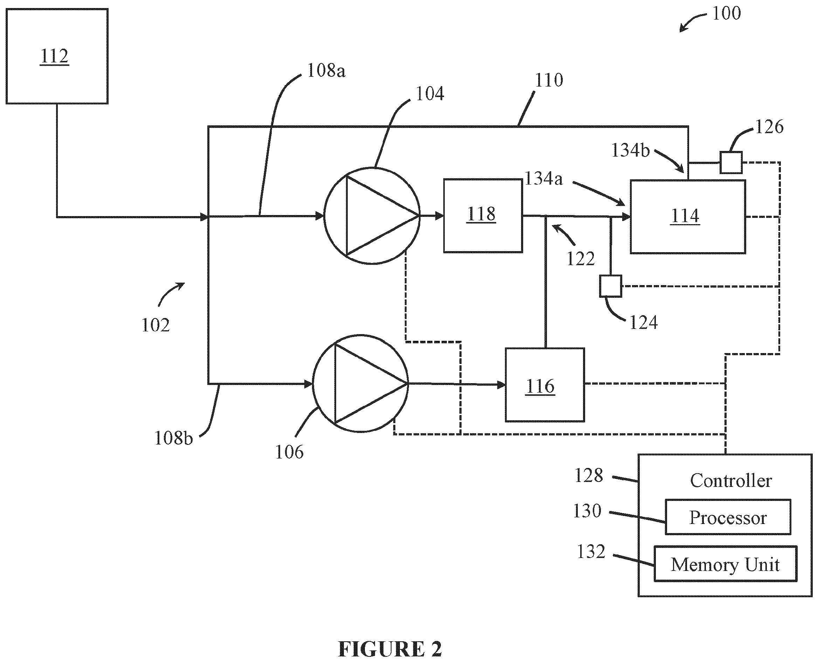

The dual pump immersion cooling system 100 can include at least one valve 116, 118 (Figure 2) that can be selectively operated to control a flow, including prevent a back flow, of cooling fluid into/through one or more of the first and second pumps 104, 106. For example, as seen in Figure 1, the dual pump immersion cooling system 100 can include one or more valves 116 that can be selectively placed in either an open condition at which cooling fluid flows through the valve 116, or a closed condition at which cooling fluid does not flow through the valve 116. A variety of different types of valves can be used for the valve 116, including, for example, a check valve or on/off valve, among other types of valves.

As seen in Figure 1, according to certain embodiments, a valve 116 can be positioned along the second branch 108b, including downstream of the second pump 106, including at a position at an outlet 120 of the second branch 108b, or between the outlet 120 and the second pump 106. Such downstream positioning of a valve 116 relative to the second pump 106 can at least prevent back flow of cooling fluid into the second pump 106 while the second pump 106 is in the off state, including, for example, while the dual pump immersion cooling system 100 is operating in the pressure mode. For example, such downstream positioning of the valve 116 can prevent, when the valve 116 is in a closed state, a back flow of cooling fluid into the second pump 106 that may occur due to at least a pressure differential developed across an inlet and outlet of the second pump 106, and/or across other locations of the fluid circuit 102, that may develop at least as a consequence of the operation of the high-pressure first pump 104 while dual pump immersion cooling system 100 is operating in the pressure mode. Additionally, or alternatively, another valve can be positioned along another portion of the second branch 108b, including an inlet 122 of the second branch 108b, or at another location that is upstream of the second pump 106.

As seen in Figure 2, according to certain embodiments, a plurality of valves 116, 118 can be positioned at a variety of locations about the fluid circuit 102. For example, Figure 2 illustrates an embodiment in which a first valve 118 is positioned along the first branch 108a at a location downstream of the first pump 104, while the above discussed valve 116, also referred to herein as the second valve 116, is positioned along the second branch 108b at a location downstream of the second pump 106. According to such an embodiment, whether one of the first valve 118 or the second valve 116 is in the open position, and the other of the first valve 118 and the second valve 116 is in the closed position, can be at least partially dependent on the operational status of the associated first or second pump 104, 106 and/or the mode of operation of the dual pump immersion cooling system 100.

For example, according to certain embodiments, when the dual pump immersion cooling system 100 is operating in the pressure mode, such that the first pump 104 is operating and the second pump 106 is in an off state, the first valve 118 can be opened to accommodate flow of cooling fluid through the first valve 118, while the second valve 116 is closed to prevent back flow of cooling fluid into the second pump 106, as previously discussed. Conversely, when the dual pump immersion cooling system 100 is operating in the flow mode, such that the second pump 106 is operating and the first pump 104 is in an off state, the second valve 116 can be opened to accommodate flow of cooling fluid through the second valve 116, while the first valve 118 is closed.

The dual pump immersion cooling system 100 can also include one or more inlet sensors 124 and one or more outlet sensors 126. The inlet sensor(s) 124 can provide information regarding one or more characteristics of the cooling fluid that is entering, or has entered, the battery 114. Therefore, one or more of the inlet sensor(s) 124 can, for example, be positioned at, or at an upstream location adjacent to, an inlet 134a of the battery 114. Conversely, one or more of the outlet sensors 126 can provide information regarding one or more characteristics of the cooling fluid exiting the battery 114. Thus, the outlet sensor(s) 126 can, for example, be positioned at, or at a downstream location adjacent to, outlet 134b of the battery 114. According to certain embodiments, one or more of the inlet sensors 124 can therefore provide an indication of characteristics of the cooling liquid when the cooling liquid initially comes into contact with a first, or a first group, of battery cells of the battery 114, and one or more outlet sensors 126 can provide an indication of the characteristics of the cooling fluid as the cooling fluid flows past the last, or a collection of the last, battery cells of the battery 114. Thus, for example, information provided by the inlet and outlet sensors 124, 126, as well as a comparison of the provided information, can provide an indication of how, after flowing past a collection of battery cells, the characteristics of the cooling fluid has changed.

The cooling fluid characteristic information provided by the inlet sensor(s) 124 and the outlet sensor(s) 126 may, or may not, be the same. Accordingly, at least some, if not all, of the types of inlet sensor(s) 124 and the outlet sensor(s) 126 may, or may not, be the same. According to certain embodiments, the inlet sensor(s) 124 can include one or more of a temperature sensor, flow sensor, and/or pressure sensor, among other sensors, as well as various combinations thereof. Similarly, the outlet sensors 126 can also include one or more of a temperature sensor, flow sensor, and/or pressure sensor, among other sensors, as well as various combinations thereof. Further, while the inlet sensors 124 and outlet sensors 126 are discussed herein with respect to providing information regarding the characteristics of the cooling fluid entering and exiting the battery 114, various other sensors can be positioned about the dual pump immersion cooling system 100, including, but not limited to at or around the first pump 104, second pump 106, and/or valve(s) 116, 118, among other locations about the fluid circuit 102, as well as various combinations thereof.

As seen in at least Figure 1, the dual pump immersion cooling system 100 can also include one or more controllers 128 having at least one processor 130 and at least one memory device 132. The controller 128, processor(s) 130, and/or memory device(s) 132 may, or may not, be dedicated to the operation of the dual pump immersion cooling system 100, or components of the dual pump immersion cooling system 100. Thus, for example, according to certain embodiments, one or more processors, including compute circuits, can be utilized to control operation of the dual pump immersion cooling system 100, and, optionally, can also be utilized in connection with the operation of other components of an associate cooling system, engine, or vehicle. Therefore, according to certain embodiments, one controller 128, including one or more processors 130 of that controller 128, can be utilized to control operation of the dual pump immersion cooling system 100, or the corresponding components of the dual pump immersion cooling system 100. Alternatively, a plurality of controllers 128, or combinations of processors 130, including compute circuits, can be utilized to control operation of dual pump immersion cooling system 100, including, control operations of different components of the dual pump immersion cooling system 100. Thus, for example, while certain embodiments herein may mention functions being performed by a controller, including the associated processor, such functions can be performed by a single controller or processor, or, alternatively, one or more functions can be performed by one or more controllers or processors, and one or more other functions can be performed by one or more other controllers or processors or combinations of controllers or processors.

The memory device 132 can have instructions stored therein that are executable by the processor 130 to cause the processor 130 to receive input, such as, for example, from the inlet sensor(s) 124, outlet sensor(s) 126, and/or relating to the operation or condition of the valves 116, 118, first pump 114, and/or second pump 106. The processor 130 can be embodied as, or otherwise include any type of processor, controller, or other compute circuit capable of performing various tasks such as compute functions and/or controlling the functions of the dual pump immersion cooling system 100 and/or associated components of the dual pump immersion cooling system 100. For example, the processor 130 can be embodied as a single or multi-core processor(s), a microcontroller, or other processor or processing/controlling circuit. In some embodiments, the processor 130 can be embodied as, include, or otherwise be coupled to an FPGA, an application specific integrated circuit (ASIC), reconfigurable hardware or hardware circuitry, or other specialized hardware to facilitate performance of the functions described herein. Additionally, in some embodiments, the processor 130 can be embodied as, or otherwise include a high-power processor, an accelerator co-processor, or a storage controller.

The memory device 132 can be embodied as any type of volatile (e.g., dynamic random-access memory (DRAM), etc.) or non-volatile memory capable of storing data therein. Volatile memory may be embodied as a storage medium that requires power to maintain the state of data stored by the medium. Non-limiting examples of volatile memory may include various types of random-access memory (RAM), such as dynamic random-access memory (DRAM) or static random-access memory (SRAM). One particular type of DRAM that may be used in a memory module is synchronous dynamic random-access memory (SDRAM).

In some embodiments, the memory device 132 can be embodied as a block addressable memory, such as those based on NAND or NOR technologies. The memory device 132 can also include future generation nonvolatile devices, such as a three-dimensional crosspoint memory device (*e.g.,* Intel 3D XPoint^{™} memory), or other byte addressable write-in-place nonvolatile memory devices. In some embodiments, the memory device 132 can be embodied as, or may otherwise include, chalcogenide glass, multi-threshold level NAND flash memory, NOR flash memory, single or multi-level Phase Change Memory (PCM), a resistive memory, nanowire memory, ferroelectric transistor random access memory (FeTRAM), antiferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device 132 can refer to the die itself and/or to a packaged memory product. In some embodiments, 3D crosspoint memory (e.g., Intel 3D XPoint^{™} memory) can comprise a transistor-less stackable cross point architecture in which memory cells sit at the intersection of word lines and bit lines and are individually addressable and in which bit storage is based on a change in bulk resistance.

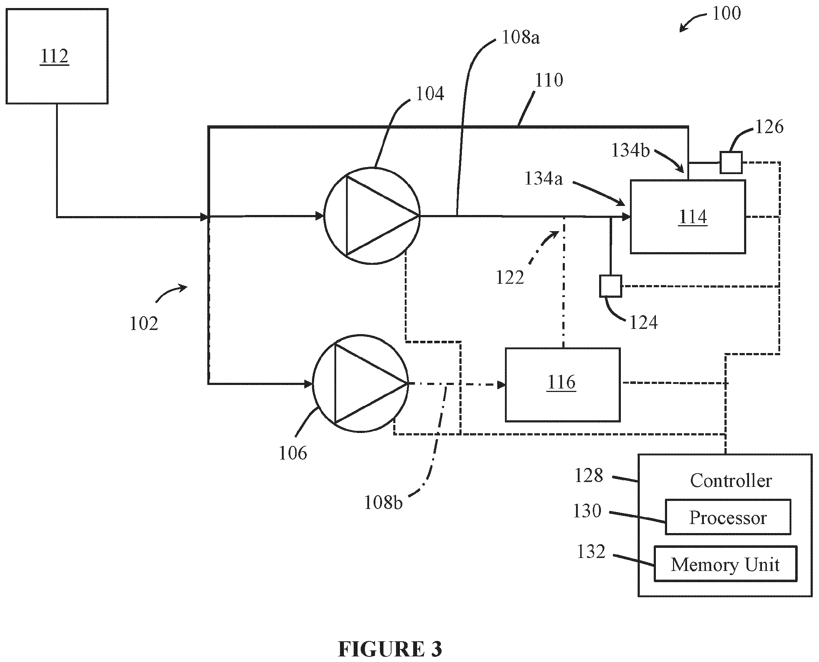

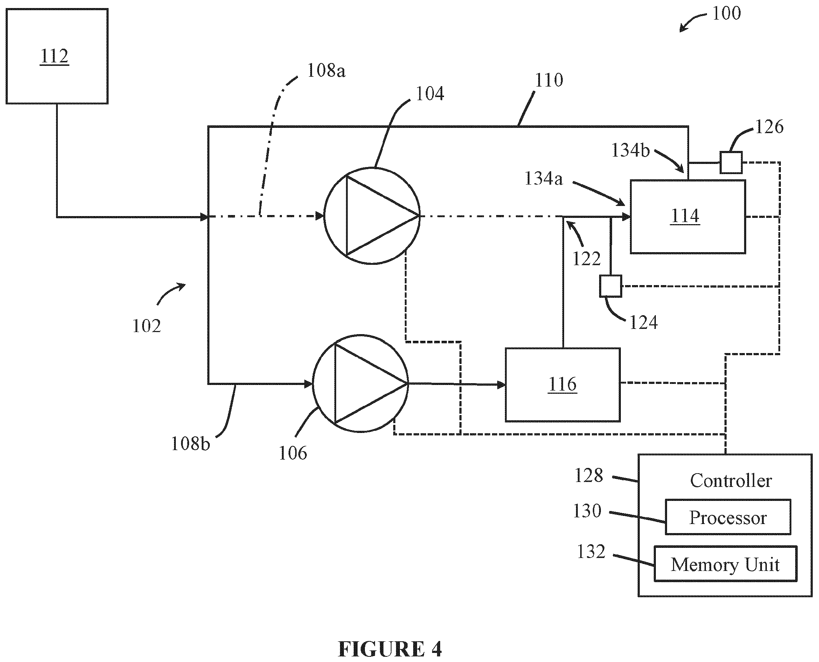

Figure 3 illustrates the exemplary dual pump immersion cooling system 100 shown in Figure 1 operating in a pressure mode such that cooling fluid passes through the first branch 108a, and not the parallel second branch 108b, of the immersion cooling fluid circuit 102. In both Figure 3 and Figure 4, a first type of broken line format is utilized to generally indicate portions of fluid circuit 102 at which the cooling fluid is currently not flowing within the fluid circuit 102. Figures 3 and 4 also utilize a second type of broken line format to generally represent that the controller 128 is communicatively coupled to various components of the dual pump immersion cooling system 100. However, such communicative coupling of the controller 128 to the components of the dual pump immersion cooling system 100 can be attained in a variety of manners in addition to, or that are different than, that illustrated in Figures 3 and 4.

With respect to the pressure mode illustrated in Figure 3, the first pump 104 is operating, while the second pump 106 is in an off state. Further, the second valve 116 is in the off position so as to prevent cooling fluid from flowing into or through the second pump 106. Moreover, as previously discussed, with the second valve 116 of the second branch 108b of the fluid circuit 102 being in the closed position, the second valve 116 can at least assist in preventing a backflow of cooling fluid through the second pump 106 that could otherwise occur because of pressure differentials within the fluid circuit 102 and/or across the inlet and outlet of the second pump 106. Moreover, as the second pump 106 can, according to certain embodiments, be a centrifugal pump, the centrifugal pump itself may not be structured to prevent such backflow through the second pump 106. For example, with respect to embodiments in which the second pump 106 is a centrifugal pump, regardless of the centrifugal pump being in the off state, without the second valve 116 being the closed position, cooling fluid could still be able to flow through the centrifugal pump in a manner that could facilitate rotation of the impeller of the centrifugal pump.

Thus, in the illustrated dual pump immersion cooling system 100 shown in Figure 3, with the second valve 116 in the second branch 108b closed and the first pump 104, but not the second pump 106, operating, cooling fluid flows through the first branch 108a and not the second branch 108b. Thus, at least temporarily, a flow path is established in which cooling fluid can flow through at least the first branch 108a and is delivered to the battery 114 before being returned to the first branch 108a, wherein the cooling fluid can again be delivered to the battery 114. As previously mentioned, in such a situation, the cooling fluid can still flow through other components of the dual pump immersion cooling system 100, including, but not limited to, one or more heat exchangers, a filter(s), and a pressure relief valve(s), among other components that can be associated with such a fluid circuit used for immersion cooling of a battery 114. With the dual pump immersion cooling system 100 operating in the pressure mode, information provided one or more inlet sensor 124 and/or one or more outlet sensor 126 can be used in connection with feedback control for operation of at least the first pump 104. According to certain embodiments, information provided by the inlet sensor 124 and/or the outlet sensor 126 can be provided to the controller 128. Using such information, the controller 128 and/or the associated processor(s) 130 can, if necessary, generate one or more signals to adjust an operation of the first pump 104. For example, as previously mentioned, according to the illustrated embodiments, the first pump 104 can, at least relative to the second pump 106, be a high-pressure, low-flow type pump, such as, for example, a positive displacement pump. Accordingly, the inlet sensor 124 can comprise a pressure sensor that can indicate a pressure of the cooling fluid entering at least the battery 114. Using the information provided by the inlet sensor 124, the controller 128 can determined whether the cooling fluid at, or approaching, the inlet 134a of the battery 114 is at, approaching, or exceeding, a predetermined pressure threshold for the battery 114. The predetermined pressure threshold can vary for different batteries and/or immersion cooling systems, and can include, but is not limited to, around 2 bars, among other pressures. Accordingly, if a situation arises in which the controller 128 determines that information provided by the inlet indicates that the pressure of the cooling fluid is at, approaching, or exceeding the predetermined pressure limit, the controller 128 can generate one or more signals to adjust an operation, such as, for example, a pump speed or displacement, of the first pump 104. Such an adjustment can correspond to the operation of the first pump 104 being adjusted in a manner that reduces the pressure of the cooling fluid in the fluid circuit and/or reduces the pressure of the cooling fluid in the fluid circuit 102 that is being created by operation of the first pump 104.

Figure 4 illustrates the exemplary immersion cooling fluid circuit 102 shown in Figure 1 in which the dual pump immersion cooling system 100 is being operated in the flow mode. As seen, in the flow mode, the second valve 116 is in the open condition, the second pump 106 is in operation, and the first pump 104 is in the off state. Accordingly, cooling fluid is being circulated, or pumped, through the second branch 108b, among other portions of the fluid circuit 102, including flowing through the second valve 116 and the battery 114, via operation of the second pump 106. Additionally, as seen by Figure 4, cooling fluid is not flowing through the first branch 108a, including not flowing through the first pump 104. As previously mentioned, according to certain embodiments, the configuration of the first pump 104, including, for example, a positive displacement pump, can prevent cooling fluid from flowing through the first pump 104 when the first pump 104 is in the off state. However, as seen in Figure 2, according to at least certain embodiments, one or more first valves 118 can also be positioned to control, including selectively prevent, flow of cooling fluid through the first branch 108a and/or the first pump 104.

The one or more of the inlet sensors 124 and/or more of the outlet sensors 126 can provide information utilized in connection with feedback control by the controller 128 of the second pump 106. The type of feedback information, or way the feedback information is used, for operation of the second pump 106, or flow mode operation of the immersion cooling system 100, can be different than the above-discussed feedback control for the first pump 104, or pressure mode operation of the immersion cooling system 100. Moreover, while the feedback control for the first pump 104, or pressure mode, can relate controlling the pressure of the cooling fluid at least at or around the inlet 134a of the battery 114, the feedback control for the second pump 106, or flow mode, can relate to controlling the flow rate of the cooling fluid, and, moreover, whether the manner in which the flow rate is, or is not, impacting controlling the temperature of at least the battery cells of the battery 114. Thus, according to certain embodiments, the inlet and outlet sensors 124, 126 can each comprise temperature sensors that indicate the temperature of the cooling fluid as the cooling fluid enters, and exits, the battery 114, and thus across the battery cells of the battery 114. Such a temperature differential obtained from a different between detected temperatures at, or around the inlet and outlet 134a, 134b of the battery 114 can also be used to directly, or indirectly, derive other information regarding the characteristics of the cooling fluid and/or the operation of the associated second pump 106. For example, information relating to the temperature differential across the battery 114, as may be attained, for example, via evaluation of information from the inlet and outlet sensors 124, 126, can indicate a flow rate of the cooling fluid. Further, such information can also be derived by, or supplemented, by inclusion of other types of inlet and outlet sensors 124, 126, in combination with, or in lieu of, temperature sensors, including, but not limited to, pressure sensors and flow sensors.

The information provided by the inlet and outlet sensors 124, 126 can be communicated to the controller 128, and associated processor 130, and/or a controller, including processor, of the second pump 106. Thus, for example, minimal changes in the temperature of the cooling fluid that enters and exits the battery 114, as indicated by at least a comparison of information provided by the inlet and outlet sensors 124, 126, can indicate that operation, such as, for example, a reduction in pump speed, of the second pump 106 is to be adjusted to facilitate a reduction in the flow rate of the cooling fluid. Conversely, excessive changes in the temperature of the cooling fluid that enters and exits the battery 114, as indicated by at least a comparison of information provided by the inlet and outlet sensors 124, 126, can indicate that operation, such as, for example, an increase in pump speed, of the second pump 106 is to be adjusted to facilitate an increase in the flow rate of the cooling fluid. Accordingly, in situations in which the operation of the second pump 106 is to be adjusted to adjust the flow rate of the cooling fluid, such adjustment(s) can be in response to one or more signals generated by the controller 128, including the processor 130, and/or the controller, and associated processor(s), of the second pump 106.

At certain times, the immersion cooling system 100 can transition from at least operating in the pressure mode, wherein the first pump 104 is operating and the second pump 106 is in the off state, to operating in the flow mode, wherein the second pump 106 is operating and the first pump 104 is in the off state. The timing, or point, of such a transition, also referred to herein as transition point 142, from the pressure mode to the flow mode can, according to the illustrated embodiment, be based on the temperature and/or viscosity of the cooling fluid. The cooling fluid temperature and/or cooling fluid viscosity, or associated ranges, at which such a transition occurs can be based on a variety of criteria, including, for example, the composition of the cooling fluid and/or the configuration of the immersion cooling system 100. Additionally, or alternatively, the transition point 142 for changing from operating in the pressure mode to the fluid mode can be based on a degree of change in the temperature or viscosity of the cooling fluid from a point in time before, or during, operation of the immersion cooling system in the pressure mode.

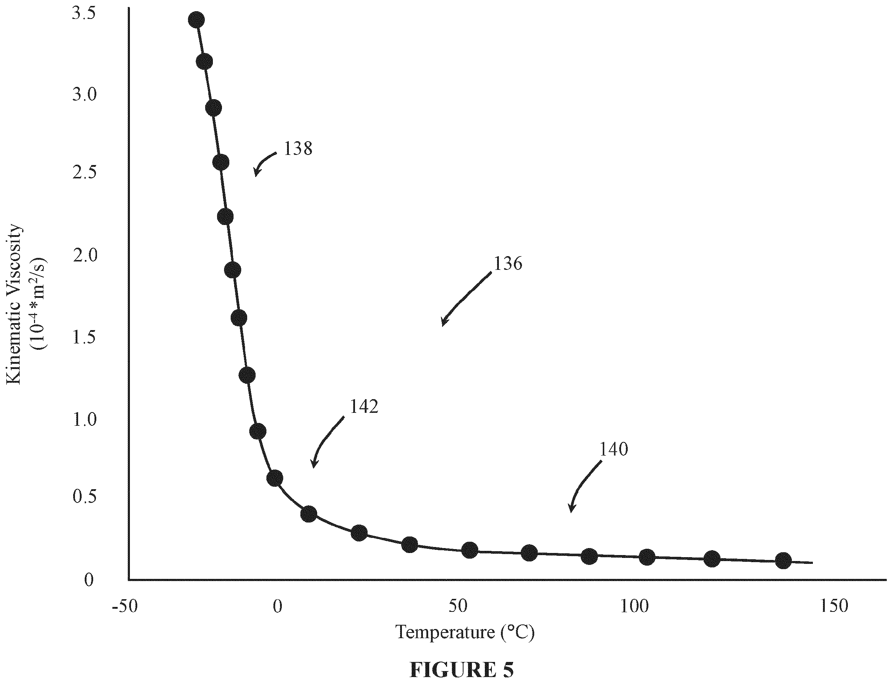

The controller 128, including the memory device 132, can store one viscosity curves, charts, and/or look-up tables relating to at least to the cooling fluid. Such information can, when considered in connection with information provided by one or more of the inlet sensor(s) 124 and/or outlet sensor(s) 126, be used by the controller 128 to determine, including estimate, predict, and/or identify, when the immersion cooling system 100 is to transition from the pressure mode to the flow mode. For example, Figure 5 illustrates an exemplary graphical representation of a kinematic viscosity diagram for a non-limiting example of a hypothetical dielectric cooling fluid. Information such as that shown in the non-limiting example depicted in Figure 5, or similar information, can be stored by the memory device 132, among other locations, and be utilized by one or more processors 130 to determine when the immersion cooling system 100 is to operated in the pressure mode or the flow mode, and, if necessary, determine when the immersion cooling system 100 is to transition from operating in the pressure mode to operating in the flow mode. The exemplary viscosity curve 136 shown in Figure 5 comprises a generally vertical component 138 and a generally vertical component 138, with a transition, or transition area or point 142 (referred to herein as transition point 142) between the vertical component 138 and the horizontal component 140 being around 0 degrees Celsius (° C).

With respect to the vertical component 138, as seen in Figure 5, the exemplary cooling fluid has a relatively high viscosity when the temperature of the cooling fluid is below around 0 °C. Additionally, as also illustrated in Figure 5, in this example, the viscosity of the cooling fluid increases exponentially with minimal drops in temperatures below 0 °C. Thus, when the temperature of the cooling fluid is within the temperature range of the vertical component 138 of the illustrated exemplary viscosity curve 136, due at least to the relatively high viscosity of the cooling fluid, operation of the high-pressure, low-flow first pump 104, or the immersion cooling system 100 in the pressure mode, may be more beneficial that the second pump 106/flow mode with at least respect to building cooling fluid pressure in the fluid circuit and attaining sufficient flow for adequate heat transfer from the battery cells. Conversely, with respect to the horizontal component 140, when the temperature of the cooling fluid is above around 0° C, the viscosity of the cooling fluid is relatively low, and the viscosity undergoes small changes despite ever increasing elevations in the temperature of the cooling fluid. Thus, when the characteristics of the cooling fluid fall within the horizontal component 140 of the illustrated exemplary viscosity curve 136, such as the cooling fluid temperature is above around 0° C, operation of the low-pressure, high-flow second pump 106, or the immersion cooling system 100 in the flow mode, may be more beneficial with at least respect to attaining a cooling fluid flow rate for adequate transfer of heat from the battery cells to the cooling fluid.

In the example provided by Figure 5, with the transition point 142 being around 0 °C, when the cooling fluid temperature is at or above a transition temperature of around 0 °C, the controller 128, including one or more processors 130, can generate one or more signals to facilitate operation of the immersion cooling system 100 in the flow mode. Further, to the extent the temperature of the cooling fluid necessitated at least temporary operation of the immersion cooling system 100 in the pressure mode, the once the temperature of the cooling fluid is elevated, such as, for example, by heat from the battery 114, to a temperature at, or above, the transition temperature of 0 °C, the controller 128, including one or more processors 130, can generate one or more signals to facilitate a transition of the immersion cooling system 100 from operating in the pressure mode to the flow mode. Such a transition from the pressure mode to the flow mode can result in the controller 127 generating one or more signals to facilitate the deactivation of the first pump 104, and activation of the second pump 106, as well as any corresponding opening or closing of one or more valves 116, 118, as previously discussed.

The transition from operation of the immersion cooling system 100 in the pressure mode to the flow mode can, according to certain embodiments, involve a continuous or a discontinuous transition between the operation of the first and second pumps 104, 106. For example, with a continuous transition, there may be no period in which neither the first pump 104 nor the second pump 106 is operating. Thus, for example, during a transition from the pressure mode to the flow mode, the first pump 104 can cease pumping cooling fluid after the second pump 106 has commenced pumping cooling fluid. Thus, as there is no period in which at least one pump 1014, 106, is at least partially pumping cooling fluid, the cooling fluid is continuously being pumped. Conversely, with the discontinuous transition, during a transition from the pressure mode to the flow mode, the first pump 104 may cease pumping cooling fluid before the second pump commences pumping, or before the second pump 106 is in the process or ramping up to pump, the cooling fluid. Thus, with the discontinuous mode, there can be a period in which neither the first pump 104 nor the second pump 106 is pumping cooling fluid, which can also be referred to as a dead zone.

As previously mentioned, compared to at least the second pump 106, the first pump 104 is a high-pressure pump. Thus, in at least certain situations in which both the first pump 104 and second pump 106 are at least temporarily operating at the same time, such as, for example, in connection with a transition between the pressure mode and the flow mode that utilizes a continuous transition, differences in generated pressure between the pumps 104, 106 as both pumps 104, 106 are operated can result in a back flow of cooling fluid into the lower pressure second pump 106. Such a back flow can result in a stalling of the second pump 106, which could be particularly detrimental if such stall occurs, or continues, when or after operation of the first pump 104 ceases. Thus, while a discontinuous transition may result in a temporary dead zone, the discontinuous transition may not have, or may prevent, issues relating to stalling of the second pump 106 that can be experienced with the continuous transition.

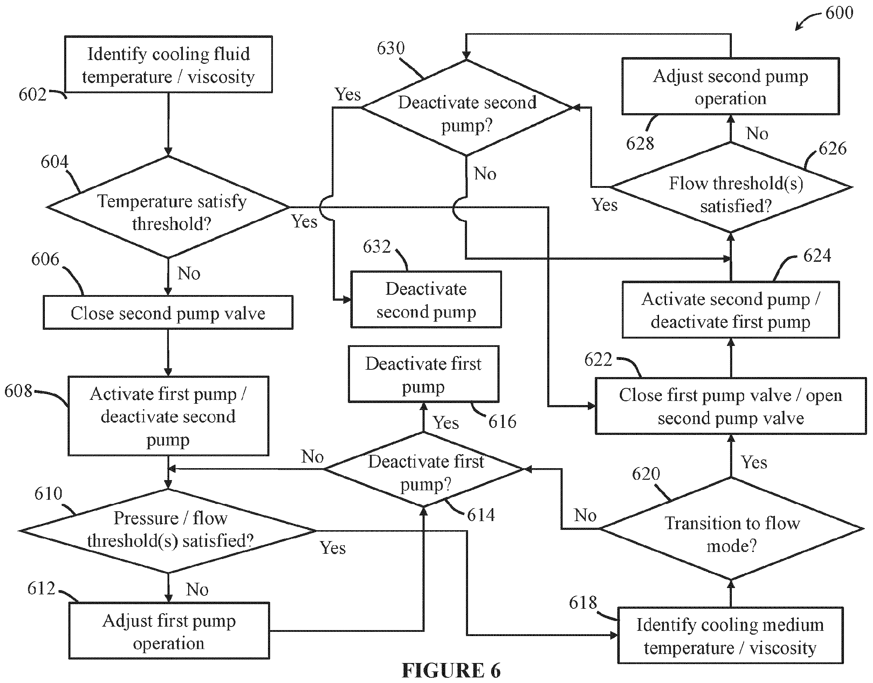

Figure 6 illustrates an exemplary method 600 for operating a dual pump immersion cooling system 100 for one or more batteries 114 of an electric vehicle. The method 600 is described below in the context of being carried out by the illustrated exemplary immersion cooling system 100. However, it should be appreciated that method 600 can likewise be carried out by any of the other described implementations, as well as variations thereof. Further, the method 600 corresponds to, or is otherwise associated with, performance of the blocks described below in the illustrative sequence of Figure 6. It should be appreciated, however, that the method 600 can be performed in one or more sequences different from the illustrative sequence. Additionally, one or more of the blocks mentioned below may not be performed, and the method can include steps or processes other than those discussed below.

At block 602, the temperature of the cooling fluid and/or the cooling fluid viscosity can be determined, such as, for example, by information provided to the controller 128 by the inlet sensor 124 and/or the outlet sensor 126. Using information provided by the inlet and/or outlet sensor 124, 126, at block 604 the controller 128 can determine whether the identified cooling fluid temperature and/or viscosity satisfy a corresponding threshold value. For example, according to certain embodiments, the threshold value is a threshold temperature can correspond to the transition temperature discussed above with respect to Figure 5. Thus, the determination at block 604 can involve determining whether, based on the current temperature and/or viscosity of the cooling fluid, the immersion cooling system 100 is to operate in the pressure mode or the flow mode.

Accordingly, if the threshold value is not satisfied, such as, for example, the temperature of the cooling fluid is below the transition temperature, the controller 128 can determine at block 604 that the immersion cooling system 100 is to operate in the pressure mode. Thus, at block 606, to the extent not already closed, the controller 128 can generate signal to facilitate the closing of the second valve 116 in the second branch 108b. Further, at block 608, the second pump 106 can remain, or, if needed, placed in, the off state, and the first pump 104 can be activated so that the first pump 104 is operated to pump the cooling fluid in the fluid circuit 102.

With the first pump 104 operating, at least the inlet sensor 124 can provide information to the controller 128 that the controller 128 can use at block 610 to determine whether the cooling fluid that is entering the battery 114 is approaching, is at, or has exceeded, or otherwise is not satisfying the predetermined pressure threshold for the battery 114, as previously discussed. While the predetermined pressure threshold is discussed herein as relating to an upper pressure limit of the battery 114, the predetermined pressure threshold can correspond to a cooling fluid pressure range that is to be attained by operation of either or both the first and second pumps 104, 106, with such range having upper and lower pressure limits.

If the cooling fluid pressure is determined at block 610 to not satisfy the predetermined pressure threshold, then at block 612, the controller 128 can generate one or more signals to adjust an operation of the first pump 104, such as, for example, a speed or displacement of the first pump 104. Further, at block 614, the controller 128 can determine whether the first pump 104 is to continue being operated, and if so, continue monitoring and determining whether the predetermined pressure threshold is being satisfied that block 610, as indicated by Figure 6. Alternatively, in certain situations, such as, for example, in instances wherein the associated engine has been deactivated while the first pump 104 is operating, the controller 128 can determine at block 616 to deactivate operation of the first pump 104.

The controller 128 can repeatedly, if not generally continuously or at predetermined intervals, evaluate whether the predetermined pressure threshold is being satisfied during operation of the first pump 104, as generally indicated by block 610. Similarly, while the immersion cooling system 100 is operating in the pressure mode, the controller 128 can also be repeatedly, if continuously or at predetermined intervals, evaluate the temperature and/or viscosity of the cooling fluid via information provided by one or more of the inlet and/or outlet sensors 124, 126 to determine whether to transition from the pressure mode to the flow mode, as generally indicated by block 620. If the immersion cooling system 100 is to continue operating in the pressure mode, then the method 600 can return to block 614, wherein, again, the controller 128 can determine whether the first pump 104 is to continue operating, and, if so, the controller 128 can continue with the monitoring of the cooling fluid pressure.

If, however, the controller 128 determines at block 620, or at block 604, that one or more characteristics of the cooling liquid satisfy the threshold value, such as, for example, temperature being at, or above, the transition temperature, then at block 622 the immersion cooling system 100 can operate in the flow mode. As previously discussed, operation of the immersion cooling system 100 in the flow mode can comprise the operation of the second pump 106, but not the first pump 104.

Thus, if the immersion cooling system 100 is to operate in the flow mode, as determined at either block 604 or 620, to the extent the valve 116 of the second branch 108b is in the closed position, at block 622 the controller 128 can generate a signal to facilitate the valve 116 being place in the open position such that fluid being pumped by the second pump 106 can flow through the second pump 106 and out of the second branch 108b. Further, to the extent necessary, if not ready in an off state, the controller 128 can issue a signal at block 624 to facilitate the first pump 104 being placed in the off state, as well as generate a signal to activate the second pump 106. As discussed above, with respect to situations in which the immersion cooling system 100 had been operating in the pressure mode, a continuous transition or discontinuous transition can occur between the operation of immersion cooling system 100 in the pressure mode and the subsequent operation in the flow mode. For example, as discussed above, with respect to a discontinuous transition, the controller 128 can time the deactivation of the first pump 104 and the subsequent activation or operation of the second pump 106 such that there is at least a temporary dead band during which neither the first pump 104 nor the second pump 106 is pumping the cooling liquid. Additionally, or alternatively, according to embodiments in which another, first valve 118 can be position in the first branch 108a, or positioned to control the flow of cooling fluid into or out of the first branch 108a, the controller 128 can also coordinate the stoppage in the operation of the first pump 104 with the closing of the first valve 118.

With the immersion cooling system 100 operating in the flow mode, the controller 128 can monitor whether the second pump 106 is operating in a way the temperature differential across the inlet and the outlet 134b of the battery 114, as indicated directly or indirectly from information provided by the inlet sensor 124 and outlet sensor 126, is satisfying the cooling requirements of the battery 114. Moreover, come on the controller 128 can evaluate whether the flow rate of the cooling fluid is to be adjusted so that the battery 114 and/or battery 114 cells are maintained within a predetermined temperature range. Thus, for example, if the controller 128 determines at block 626 that, based on the temperature information provided by the inlet sensor 124 and outlet sensor 126(s), the cooling fluid flow rate is to be increased or, conversely, decreased, then at block 624 the controller 128 can generate one or more signals to adjust an operation of the second pump 106 accordingly, including, for example, adjust the pump speed.

While monitoring the characteristics of the cooling fluid and/or the battery 114 while operating in the flow mode, as is generally indicated by block 626, and adjusting the operation of the second pump 106 as needed, as indicated by block 628, the controller 128 can also be monitoring whether the second pump 106 is to be deactivated, as indicated by block 630. For example, the controller 128 can monitor at block 630 whether the associated engine is being, or has been, deactivated in connection with determining if, or when, the second pump 106 is to be deactivated at block 632. Otherwise, if the immersion cooling system 100 is to continue operating in the flow mode, the controller 128 can continue with monitoring one or more characteristics of the cooling fluid at block 626 until, for example, the second pump 106 is deactivated at have block 632.

## Claims

1. An immersion cooling system (100) for immersion cooling of a plurality of battery cells of a battery (114) of an electric vehicle using a dielectric cooling liquid, the immersion cooling system (100) comprising:
a fluid circuit (102) configured for at least the circulation of the dielectric cooling to, and from, the battery (114), the fluid circuit (102) having a first branch (108a) and a second branch (108b), the first branch (108a) being parallel to the second branch (108b);
a first pump (104) positioned along the first branch (108a);
a second pump (106) and a valve (116) positioned along the second branch (108b), the second pump (106) being, relative to the first pump (104), a high-flow, low-pressure pump;
an inlet sensor (124) position at or around an inlet of the battery (114);
an outlet sensor (126) positioned at or around an outlet of the battery (114);
at least one processor (130); and
a memory device (132) coupled to the at least one processor (130), the memory device (132) including instructions that when executed by the at least one processor (130) cause one or more of the at least one processor (130) to:
determine, using at least information from one or more of the inlet sensor (124) and the outlet sensor (126), whether at least one characteristic of the dielectric cooling liquid satisfies a threshold value;
generate one or more signals, if the at least one characteristic of the dielectric cooling liquid does not satisfy the threshold value, to operate the immersion cooling system (100) in a pressure mode wherein the first pump (104), and not the second pump (106), pumps the dielectric cooling liquid and the valve (116) is at a closed position that prevents a flow of the dielectric cooling liquid through at least the valve (116); and
generate one or more signals, if the at least one characteristic of the dielectric cooling liquid does satisfy the threshold value, to operate the immersion cooling system (100) in a flow mode wherein the second pump (106), and not the first pump (104), pumps the dielectric cooling liquid and the valve (116) is at an open position that allows a flow of the dielectric cooling liquid through at least the valve (116),
**characterized in that**
the memory device (132) further includes instructions that when executed by the at least one processor (130) cause one or more of the at least one processor (130) to:
adjust an operation of the first pump (104), but not the second pump (106), in response to a determination of a pressure of the dielectric cooling liquid not satisfying a predetermined pressure threshold; and
adjust an operation of the second pump (106), but not the first pump (104), in response to a determination relating to a temperature differential across the plurality of battery cells.

2. The immersion cooling system (100) of claim 1, wherein the at least one characteristic relates to a viscosity of the dielectric cooling liquid.

3. The immersion cooling system (100) of claim 1 or 2, wherein the at least one characteristic is a temperature of the dielectric cooling liquid.

4. The immersion cooling system (100) of one of the claims 1 to 3, wherein the first pump (104) is a positive displacement pump, and the second pump (106) is a centrifugal pump.

5. The immersion cooling system (100) of one of the claims 1 to 4, wherein the valve (116) is positioned downstream of the second pump (106).

6. The immersion cooling system (100) of one of the claims 1 to 5, wherein the memory device (132) further includes instructions that when executed by the at least one processor (130) cause one or more of the at least one processor (130) to:
generate, based at least on a change of the at least one characteristic of the dielectric cooling liquid, one or more signals to facilitate a transition of operation of the immersion cooling system (100) from the pressure mode to the flow mode, wherein the transition comprises a deactivation of the first pump (104), an activation of the second pump (106), and the valve (116) being displaced from the closed position to the open position.

7. The immersion cooling system (100) of one of the claims 1 to 6, wherein the change of the at least one characteristic of the dielectric cooling liquid comprises a viscosity of the dielectric cooling liquid decreasing to a level that satisfies the threshold value.

8. The immersion cooling system (100) of one of the claims 1 to 7, wherein:
the first pump (104) and the second pump (106) arranged in parallel in a fluid circuit (102), the first pump (104) being a different type of pump than the second pump (106);
the valve (116) positioned to prevent backflow of the dielectric cooling liquid into the second pump (106) during an operation of the first pump (104); and
wherein the memory device (132) further includes instructions that when executed by the at least one processor (130) cause one or more of the at least one processor (130) to generate, when the immersion cooling system (100) is operated in the pressure mode, and in response to a determination that the one or more characteristics of the dielectric cooling liquid satisfies the threshold value, one or more signals to transition the immersion cooling system (100) from being operated in the pressure mode to being operated in the flow mode.

9. The immersion cooling system (100) of one of the claims 1 to 8, wherein the memory device (132) further includes instructions that when executed by the at least one processor (130) cause one or more of the at least one processor (130) to:
adjust an operation of the first pump (104), but not the second pump (106), in response to a determination of a pressure of the dielectric cooling liquid not satisfying a predetermined pressure threshold; and
adjust an operation of the second pump (106), but not the first pump (104), in response to a determination relating to a temperature differential across the plurality of battery cells.

## Patentansprüche

1. Tauchkühlsystem (100) zur Tauchkühlung einer Vielzahl von Batteriezellen einer Batterie (114) eines Elektrofahrzeugs unter Verwendung einer dielektrischen Kühlflüssigkeit, wobei das Tauchkühlsystem (100) umfasst:
einen Fluidkreislauf (102), der mindestens für die Zirkulation der dielektrischen Kühlung zu und von der Batterie (114) ausgelegt ist, wobei der Fluidkreislauf (102) einen ersten Zweig (108a) und einen zweiten Zweig (108b) aufweist, wobei der erste Zweig (108a) parallel zum zweiten Zweig (108b) ist;
eine erste Pumpe (104), die entlang des ersten Zweigs (108a) positioniert ist;
eine zweite Pumpe (106) und ein Ventil (116), die entlang des zweiten Zweigs (108b) positioniert sind, wobei die zweite Pumpe (106) in Bezug auf die erste Pumpe (104) eine Niederdruckpumpe mit hohem Durchsatz ist;
einen Eingangssensor (124), der an oder um einen Eingang der Batterie (114) positioniert ist;
einen Ausgangssensor (126), der an oder um einen Ausgang der Batterie (114) positioniert ist;
mindestens einen Prozessor (130); und
eine Speichervorrichtung (132), die mit dem mindestens einen Prozessor (130) gekoppelt ist, wobei die Speichervorrichtung (132) Anweisungen umfasst, die bei Ausführung durch den mindestens einen Prozessor (130) einen oder mehrere des mindestens einen Prozessors (130) zu Folgendem veranlassen:
unter Verwendung mindestens von Informationen von einem oder mehreren des Eingangssensors (124) und des Ausgangssensors (126) zu bestimmen, ob mindestens eine Eigenschaft der dielektrischen Kühlflüssigkeit einen Schwellenwert erfüllt;
ein oder mehrere Signale zu erzeugen, wenn die mindestens eine Eigenschaft der dielektrischen Kühlflüssigkeit den Schwellenwert nicht erfüllt, um das Tauchkühlsystem (100) in einem Druckmodus zu betreiben, in dem die erste Pumpe (104) und nicht die zweite Pumpe (106) die dielektrische Kühlflüssigkeit fördert und sich das Ventil (116) in einer geschlossenen Stellung befindet, die einen Durchfluss der dielektrischen Kühlflüssigkeit durch mindestens das Ventil (116) verhindert; und
ein oder mehrere Signale zu erzeugen, wenn die mindestens eine Eigenschaft der dielektrischen Kühlflüssigkeit den Schwellenwert erfüllt, um das Tauchkühlsystem (100) in einem Durchflussmodus zu betreiben, in dem die zweite Pumpe (106) und nicht die erste Pumpe (104) die dielektrische Kühlflüssigkeit fördert und sich das Ventil (116) in einer geöffneten Stellung befindet, die einen Durchfluss der dielektrischen Kühlflüssigkeit durch mindestens das Ventil (116) ermöglicht,
**dadurch gekennzeichnet, dass**
die Speichervorrichtung (132) ferner Anweisungen enthält, die bei Ausführung durch den mindestens einen Prozessor (130) einen oder mehrere des mindestens einen Prozessors (130) zu Folgendem veranlassen:
einen Betrieb der ersten Pumpe (104), aber nicht der zweiten Pumpe (106), als Reaktion auf eine Bestimmung, dass ein Druck der dielektrischen Kühlflüssigkeit einen vorbestimmten Druckschwellenwert nicht erfüllt, anzupassen; und
einen Betrieb der zweiten Pumpe (106), aber nicht der ersten Pumpe (104), als Reaktion auf eine Bestimmung bezüglich einer Temperaturdifferenz über die Vielzahl von Batteriezellen anzupassen.

2. Tauchkühlsystem (100) nach Anspruch 1, wobei sich die mindestens eine Eigenschaft auf eine Viskosität der dielektrischen Kühlflüssigkeit bezieht.

3. Tauchkühlsystem (100) nach Anspruch 1 oder 2, wobei die mindestens eine Eigenschaft eine Temperatur der dielektrischen Kühlflüssigkeit ist.

4. Tauchkühlsystem (100) nach einem der Ansprüche 1 bis 3, wobei die erste Pumpe (104) eine Verdrängerpumpe ist und die zweite Pumpe (106) eine Kreiselpumpe ist.

5. Tauchkühlsystem (100) nach einem der Ansprüche 1 bis 4, wobei das Ventil (116) stromabwärts der zweiten Pumpe (106) positioniert ist.

6. Tauchkühlsystem (100) nach einem der Ansprüche 1 bis 5, wobei die Speichervorrichtung (132) ferner Anweisungen umfasst, die bei Ausführung durch den mindestens einen Prozessor (130) einen oder mehrere des mindestens einen Prozessors (130) zu Folgendem veranlassen:
ein oder mehrere Signale basierend mindestens auf einer Änderung der mindestens einen Eigenschaft der dielektrischen Kühlflüssigkeit zu erzeugen, um einen Übergang des Betriebs des Tauchkühlsystems (100) von dem Druckmodus in den Durchflussmodus zu ermöglichen, wobei der Übergang eine Deaktivierung der ersten Pumpe (104),
eine Aktivierung der zweiten Pumpe (106) und eine Verstellung des Ventils (116) von der geschlossenen Stellung in die geöffnete Stellung umfasst.

7. Tauchkühlsystem (100) nach einem der Ansprüche 1 bis 6, wobei die Änderung der mindestens einen Eigenschaft der dielektrischen Kühlflüssigkeit eine Viskositätsabnahme der dielektrischen Kühlflüssigkeit auf einen Wert umfasst, der den Schwellenwert erfüllt.

8. Tauchkühlsystem (100) nach einem der Ansprüche 1 bis 7, wobei:
die erste Pumpe (104) und die zweite Pumpe (106) parallel in einem Fluidkreislauf (102) positioniert sind, wobei die erste Pumpe (104) eine andere Art von Pumpe als die zweite Pumpe (106) ist;
das Ventil (116) so positioniert ist, dass es einen Rückfluss der dielektrischen Kühlflüssigkeit in die zweite Pumpe (106) während eines Betriebs der ersten Pumpe (104) verhindert; und
wobei die Speichervorrichtung (132) ferner Anweisungen enthält, die bei Ausführung durch den mindestens einen Prozessor (130) einen oder mehrere des mindestens einen Prozessors (130) dazu veranlassen, wenn das Tauchkühlsystem (100) im Druckmodus betrieben wird, und als Reaktion auf eine Bestimmung, dass die eine oder die mehreren Eigenschaften der dielektrischen Kühlflüssigkeit den Schwellenwert erfüllen, ein oder mehrere Signale zu erzeugen, um das Tauchkühlsystem (100) von dem Betrieb im Druckmodus in den Betrieb im Durchflussmodus zu überführen.

9. Tauchkühlsystem (100) nach einem der Ansprüche 1 bis 8, wobei die Speichervorrichtung (132) ferner Anweisungen umfasst, die bei Ausführung durch den mindestens einen Prozessor (130) einen oder mehrere des mindestens einen Prozessors (130) zu Folgendem veranlassen:
einen Betrieb der ersten Pumpe (104), aber nicht der zweiten Pumpe (106), als Reaktion auf eine Bestimmung, dass ein Druck der dielektrischen Kühlflüssigkeit einen vorbestimmten Druckschwellenwert nicht erfüllt, anzupassen; und
einen Betrieb der zweiten Pumpe (106), aber nicht der ersten Pumpe (104), als Reaktion auf eine Bestimmung bezüglich einer Temperaturdifferenz über die Vielzahl von Batteriezellen anzupassen.

## Revendications

1. Système (100) de refroidissement par immersion pour le refroidissement par immersion d'une pluralité d'éléments de batterie d'une batterie (114) d'un véhicule électrique, à l'aide d'un liquide de refroidissement diélectrique, le système (100) de refroidissement par immersion comprenant :
un circuit (102) à fluide configuré pour au moins la circulation du refroidissement diélectrique vers et depuis la batterie (114), le circuit (102) à fluide comportant une première branche (108a) et une seconde branche (108b), la première branche (108a) étant parallèle à la seconde branche (108b) ;
une première pompe (104) disposée le long de la première branche (108a) ;
une seconde pompe (106) et une vanne (116) disposée le long de la seconde branche (108b), la seconde pompe (106) étant, par rapport à la première pompe (104), une pompe basse pression, haut débit ;
un capteur (124) d'entrée disposé au niveau ou à proximité d'une entrée de la batterie (114) ;
un capteur (126) de sortie disposé au niveau ou à proximité d'une sortie de la batterie (114) ;
au moins un processeur (130) ; et
un dispositif (132) de mémoire couplé au(x) processeur(s) (130), le dispositif (132) de mémoire incluant des instructions qui, lorsqu'elles sont exécutées par le ou les processeurs (130), amènent un ou plusieurs parmi le ou les processeurs (130) à :
déterminer, en utilisant au moins des informations provenant du capteur (124) d'entrée et du capteur (126) de sortie, si au moins une caractéristique du liquide de refroidissement diélectrique satisfait une valeur seuil ;
générer un ou plusieurs signaux, si la ou les caractéristiques du liquide de refroidissement diélectrique ne satisfont pas la valeur seuil, pour faire fonctionner le système (100) de refroidissement par immersion dans un mode de pression dans lequel la première pompe (104), et non la seconde pompe (106), pompe le liquide de refroidissement diélectrique et la vanne (116) est dans une position fermée qui empêche un écoulement du liquide de refroidissement diélectrique à travers au moins la vanne (116) ; et
générer un ou plusieurs signaux, si la ou les caractéristiques du liquide de refroidissement diélectrique satisfont à la valeur seuil, pour faire fonctionner le système (100) de refroidissement par immersion dans un mode d'écoulement dans lequel la seconde pompe (106), et non la première pompe (104), pompe le liquide de refroidissement diélectrique et la vanne (116) est dans une position ouverte qui permet un écoulement du liquide de refroidissement diélectrique à travers au moins la vanne (116),
**caractérisé en ce que**
le dispositif (132) de mémoire comprend en outre des instructions qui, lorsqu'elles sont exécutées par le ou les processeurs (130), amènent un ou plusieurs parmi le ou les processeurs (130) à :
ajuster un fonctionnement de la première pompe (104), mais pas de la seconde pompe (106), en réponse à une détermination selon laquelle une pression du liquide de refroidissement diélectrique ne satisfait pas un seuil de pression prédéterminé ; et
ajuster un fonctionnement de la seconde pompe (106), mais pas de la première pompe (104), en réponse à une détermination concernant un différentiel de température à travers la pluralité d'éléments de batterie.

2. Système (100) de refroidissement par immersion selon la revendication 1, la ou les caractéristiques se rapportant à une viscosité du liquide de refroidissement diélectrique.

3. Système (100) de refroidissement par immersion selon la revendication 1 ou 2, la ou les caractéristiques étant une température du liquide de refroidissement diélectrique.

4. Système (100) de refroidissement par immersion selon l'une des revendications 1 à 3, la première pompe (104) étant une pompe volumétrique, et la seconde pompe (106) étant une pompe centrifuge.

5. Système (100) de refroidissement par immersion selon l'une des revendications 1 à 4, la vanne (116) étant positionnée en aval de la seconde pompe (106).

6. Système (100) de refroidissement par immersion selon l'une des revendications 1 à 5, le dispositif (132) de mémoire comprenant en outre des instructions qui, lorsqu'elles sont exécutées par le ou les processeurs (130) amènent en outre un ou plusieurs parmi le ou les processeurs (130) à :
générer, sur la base d'au moins un changement de la ou des caractéristiques du liquide de refroidissement diélectrique, un ou plusieurs signaux pour faciliter une transition de fonctionnement du système (100) de refroidissement par immersion du mode pression au mode écoulement, la transition comprenant une désactivation de la première pompe (104), une activation de la seconde pompe (106) et la vanne (116) étant déplacée de la position fermée à la position ouverte.

7. Système (100) de refroidissement par immersion selon l'une des revendications 1 à 6, le changement de la ou des caractéristiques du liquide de refroidissement diélectrique comprenant une diminution d'une viscosité du liquide de refroidissement diélectrique jusqu'à un niveau qui satisfait la valeur seuil.

8. Système (100) de refroidissement par immersion selon l'une des revendications 1 à 7 :
la première pompe (104) et la seconde pompe (106) étant disposées en parallèle dans un circuit (102) à fluide, la première pompe (104) étant un type de pompe différent de la seconde pompe (106) ;
la vanne (116) étant positionnée pour empêcher le reflux du liquide de refroidissement diélectrique dans la seconde pompe (106) au cours d'un fonctionnement de la première pompe (104) ; et
le dispositif (132) de mémoire comprenant en outre des instructions qui, lorsqu'elles sont exécutées par le ou les processeurs (130), amènent un ou plusieurs parmi le ou les processeurs (130) à générer, lorsque le système (100) de refroidissement par immersion fonctionne dans le mode pression, et en réponse à une détermination selon laquelle la ou les caractéristiques du liquide de refroidissement diélectrique satisfont la valeur seuil, un ou plusieurs signaux permettent de faire passer le système (100) de refroidissement par immersion d'un fonctionnement en mode pression à un fonctionnement en mode écoulement.

9. Système (100) de refroidissement par immersion selon l'une des revendications 1 à 8, le dispositif (132) de mémoire comprenant en outre des instructions qui, lorsqu'elles sont exécutées par le ou les processeurs (130), amènent un ou plusieurs parmi le ou les processeurs (130) à :
ajuster un fonctionnement de la première pompe (104), mais pas de la seconde pompe (106), en réponse à une détermination selon laquelle une pression du liquide de refroidissement diélectrique ne satisfait pas un seuil de pression prédéterminé ; et
ajuster un fonctionnement de la seconde pompe (106), mais pas de la première pompe (104), en réponse à une détermination concernant un différentiel de température à travers la pluralité d'éléments de batterie.
